# EUROPÄISCHE PATENTSCHRIFT

(11) **EP 0 617 236 B1**
(45) Veröffentlichungstag und Bekanntmachung des Hinweises auf die Patenterteilung: **28.05.1997**
(21) Anmeldenummer: 94104141.0
(22) Anmeldetag: 17.03.1994
(51) Int. Cl.: F24D 11/00

(54) **Mehrzweckspeicher**
Multi-purpose accumulator
Accumulateur à utilisation multiple

(30) Priorität: 22.03.1993 DE 9304242 U; 31.03.1993 DE 9304889 U
(43) Veröffentlichungstag der Anmeldung: 28.09.1994
(73) Patentinhaber: VIESSMANN WERKE GmbH & CO., 35107 Allendorf/Eder (DE)
(72) Erfinder: Weber, Helmut, D-35216 Biedenkopf (DE); Christ, Hans, D-35066 Frankenberg (DE)
(74) Vertreter: Wolf, Günter, Dipl.-Ing.

(56) Entgegenhaltungen:
- DE-U- 9 017 667
- DE-U- 9 200 530

## Beschreibung

Die Erfindung betrifft einen Mehrzweckspeicher für Heizungsanlagen mit mehreren Wärmequellen und Wärmeverbrauchernn nach dem ersten Teil des Patentanpruchs 1.

Solche Mehrzweckspeicher sind bspw. nach dem DE-U-83 18 372 bekannt. Orientiert bspw. an einem Ein- bzw. Zweifamilienhaus, bestehen moderne und anspruchsvolle Heizungsanlagen aus mehreren Heizquellen, nämlich Heizkessel, Sonnenkollektoren, Wärmepumpen od. dgl. und aus mehreren Wärmeverbrauchern, nämlich Heizkörpern, Brauchwassererwärmern, Fußbodenheizungen u. dgl., die funktionsgerecht verknüpft werden müssen, was bspw. zwecks optimaler Wärmeausnutzung durch solche sogenannte Mehrzweckspeicher erfolgen kann. Der Speicher nach dem DE-U-83 18 372 oder bspw. auch nach der DE-A 42 04 329 erfüllt zwar diese Aufgabe, hat aber den Nachteil, daß es sich hierbei um einen Behälter in einem Behälter handelt, der je nach Größe - abgesehen vom Gewicht - und nach den örtlichen Gegebenheiten schwierig in den Installationsraum einbringbar ist. Außerdem können der Brauchwasserteil und der sogenannte Pufferteil des Mehrzweckspeichers nicht zueinander bezüglich ihrer Bedarfsvolumina variiert werden.

Der Erfindung liegt demgemäß die Aufgabe zugrunde, für Heizungsanlagen mit mehreren Wärmequellen und Wärmeverbrauchern einen solchen Mehrzweckspeicher dahingehend zu verbessern, daß die nicht nur günstiger herstell- und installierbar sein soll, sondern auch günstiger transportier- und einbringbar und schließlich auch bezüglich der Bedarfsvolumina variierbarer.

Diese Aufgabe ist nach der Erfindung mit einem Mehrzweckspeicher mit den Merkmalen des Patentanspruchs 1 gelöst.

Heizmediumsvorlaufanschluß des Brauchwasserbehälters verbunden. Der Vorlaufanschluß des Pufferbehälters ist mit dem Rücklaufanschluß des Brauchwasserbehälters verbunden und der Brauchwasserbehälter ist auf dem Pufferbehälter angeordnet, und die Verbindungsstellen zwischen Anschlüssen der Behälter sind lösbar ausgebildet.

Beim sogenannten Pufferbehälter handelt es sich, rein konstruktiv gesehen, praktisch ebenfalls um einen gleichartigen Behälter wie es ein Brauchwasserbehälter ist, nur bedarf es am Pufferbehälter keiner Kaltwasserzufuhr- und Warmwasserabfuhranschlüsse, d.h., sowohl der Brauchwasser- als auch der Pufferbehälter weisen einen Wärmetauscher mit Vor- und Rücklaufanschlüssen für das Wärmeträgermedium auf. Die Vor- und Rücklaufanschlüsse des Wärmetauschers des Pufferbehälters müssen natürlich, sofern es sich um einen im Pufferbehälter angeordneten Wärmetauscher handelt, aus diesem Behälter herausgeführt sein.

Wesentlich beim Ganzen ist aufgrund der konsequenten Trennbarkeit beider Behälter die Verknüpfung der beiden Behälter mittels ihrer Anschlüsse wie oben kennzeichnend angeführt. Dadurch wird bei Heizungsbetrieb das Rücklaufwasser der Heizung durch den Pufferspeicher geleitet und nimmt hierbei die vom Wärmetauscher abgegebene Wärme auf. Wird keine Wärmeenergie an das Heizungssystem abgegeben, bspw. im Sommerbetrieb, so wird diese durch Schwerkraftzirkulation an den darüber angeordneten Brauchwasserbehälter abgegeben. Ist keine bzw. nicht ausreichende Wärme im Pufferbehälter vorhanden, so wird der Brauchwasserbehälter auf herkömmliche Art mittels des Heizkessels beheizt. Durch die Anordnung und Verbindung der Anschlüsse ist sichergestellt, daß bei Kesselbeheizung keine Erwärmung des im Pufferbehälter befindlichen Heizungswassers erfolgt. Außerdem ist das im Pufferbehälter befindliche Wärmeträgermedium durch die konsequente Getrennthaltung beider Behälter vom heizmediumführenden Raum des Brauchwasserbehälters wesentlich schärfer getrennt als dies mit einer gelochten Trennwand gemäß DE-A 42 04 329 möglich ist.

Zweckmäßig sind die beiden Behälter in einem gemeinsamen Umschließungsgehäuse angeordnet, was die Herstellung zweier separater Umschließungsgehäuse und entsprechender Maßnahmen, um die Behälter übereinandersetzen zu können, entbehrlich macht. Außerdem werden dabei die Verbindungsstellen als außerhalb des Umschließungsgehäuses an die Anschlüsse anschließbare Teile ausgebildet. Dadurch kann nach separater Anlieferung und Einbringung beider Komponenten der Brauchwasserbehälter problemlos auf den Pufferbehälter aufgesetzt werden, wofür beide Behälter vorteilhaft mit geeigneten Justierelementen versehen sind. Danach wird das gemeinsame Umschließungsgehäuse angebracht, das entsprechende Durchgriffsöffnungen für diverse Anschlüsse aufweist, und dann sind lediglich noch außen am Umschließungsgehäuse die notwendigen Verbindungen und Anschlüsse herzustellen.

Was die Wärmetauscher für die Zubringung der Wärmeträgermedien aus den Wärmeerzeugern betrifft, so wird für den WT im Pufferbehälter bevorzugt ein Innen-WT in Form einer Rohrwendel benutzt, und für den Wärmetausch am Brauchwasserbehälter wird dieser als außen durch einen Doppelmantel beheizbarer Behälter ausgebildet.

Der erfindungsgemäße Mehrzweckspeicher wird nachfolgend anhand der zeichnerischen Darstellung eines Ausführungsbeispieles näher erläutert.

Es zeigt schematisch
- Fig. 1: einen Schnitt durch den Mehrzweckspeicher und
- Fig. 2: die Einbindung des Mehrzweckspeichers in eine Heizungsanlage.

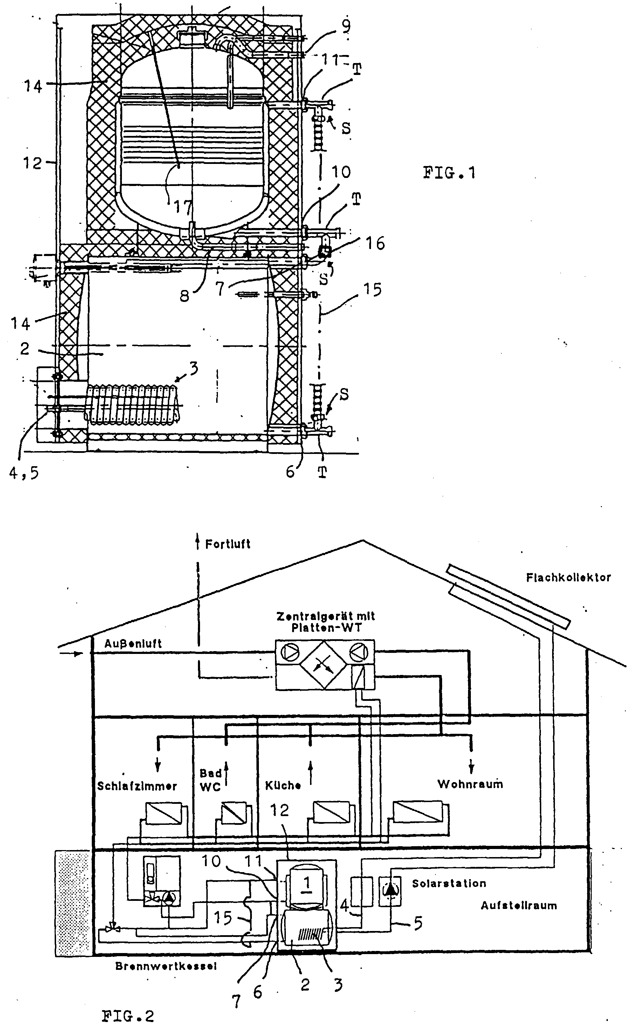

Orientiert an Fig. 1 ist für den Mehrzweckspeicher in Gesamtkombination wesentlich, daß dieser aus einem Brauchwasserbehälter 1 und einem Pufferbehälter 2 gebildet ist, wobei der Pufferbehälter 2 einen Wärmetauscher 3 mit Vor- und Rücklaufanschlüssen 4, 5 enthält und einen weiteren Vor- und Rücklaufanschluß 6, 7 aufweist. Der Wärmetauscher 3 ist dabei, und wie dargestellt, als einflanschbare Rohrwendel ausgebildet. Ferner ist der mit Kaltwasserzufuhr- und Warmwasserabfuhranschlüssen 8, 9 versehene Brauchwasserbehälter 1 mit Heizmediumsvor- und -rücklaufanschlüssen 10, 11 versehen und als außenbeheizbarer Doppelmantelbehälter ausgebildet.

Weiterhin ist der Rücklaufanschluß 7 des Pufferbehälters 2 mit dem Heizmediumsvorlaufanschluß 10 des Brauchwasserbehälters 1 und der Vorlaufanschluß 6 des Pufferbehälters 2 mit dem Rücklaufanschluß 11 des Brauchwasserbehälters 1 verbunden.

Die dargestellte Zuordnung der Behälter 1, 2, nämlich vertikal orientierter Brauchwasserbehälter 1 und horizontal angeordneter Pufferbehälter 2 ist nicht zwingend, d.h., bei funktionsgerechter Anordnung der Wärmetauscher (Rohrwendel im Pufferbehälter/Außenheizmantel am Brauchwasserbehälter), können die Behälter 1, 2 mit ihren Längsachsen auch parallel horizontal oder beide vertikal oder der Pufferbehälter vertikal und der Brauchwasserbehälter horizontal angeordnet werden.

Gemäß Fig. 1 ist der Brauchwasserbehälter 1 auf dem Pufferbehälter 2 angeordnet, und die Verbindungsstelle S zwischen Rücklaufanschluß 7 des Pufferbehälters 2 und dem Heizmediumsvorlaufanschluß 10 des Brauchwasserbehälters 1 ist lösbar ausgebildet, und beide Behälter 1, 2 sind einschließlich ihrer Wärmeisolation 14 in einem gemeinsamen Umschließungsgehäuse 12 untergebracht, wobei alle Verbindungsstellen S aus genanntem Grund als außerhalb des Umschließungsgehäuses 12 an die Anschlüsse 6, 7, 10, 11 anschließbare Teile T ausgebildet sind.

Bei den Anschlüssen 6, 11 handelt es sich dabei um T-Rohrstücke, zwischen denen sich eine Verbindungsleitung 15 erstreckt, und bei den Anschlüssen 7, 10 ebenfalls um ein T-Rohrstück, dessen einer Strang, wie dargestellt, abgebogen ist.

Bezüglich der Gesamteinbindung des Mehrzweckspeichers in eine Heizungsanlage wird auf Fig. 2 verwiesen, die mit entsprechenden Bezugszeichen versehen und außerdem beschriftet ist, so daß es, Fachkundigkeit vorausgesetzt, diesbezüglich keiner weiteren Erklärung bedarf.

Um die Effizienz des Mehrzweckspeichers erheblich zu verbessern, wird vorteilhaft in die vom Pufferbehälter 2 zum Brauchwasserbehälter 1 verlaufende Zirkulations-Vorlaufleitung ein thermostatisches Vorlaufventil 16 mit Kapillarfühler eingebaut. Durch dieses Ventil wird die Temperatur im Brauchwasserspeicher auf bspw. 60°C begrenzt, und im unteren Pufferbehälter 2 kann die gesamte Solarwärme des Tages gespeichert werden. Die Temperatur könnte dort theoretisch 95°C betragen. Hierdurch ist es möglich, an einem sonnenreichen Tag Wärme für den folgenden sonnenarmen Tag zu speichern. Ohne Thermostatventil müßte die Temperatur im Heizwasserspeicher durch Abschalten der vom Fühler 17 gesteuerten und nicht dargestellten Solar-Umwälzpumpe auf 60°C begrenzt werden, damit das Brauchwasser im oberen Behälter 1 keinen Kalk abscheidet.

Zweckmäßig ist das Vorlaufventil 16 als temperatureinstellbares Ventil ausgebildet, um für das Brauchwaser die tatsächlich gewünschte Temperatur einstellen zu können.

## Patentansprüche

1. Mehrzweckspeicher für Heizungsanlagen mit mehreren Wärmequellen und Wärmeverbrauchern mit folgenden Merkmalen:
1.1 der Mehrzweckspeicher ist aus einem Brauchwasserbehälter (1) und einem Pufferbehälter (2) gebildet,
1.2 der Pufferbehälter (2) enthält einen Wärmetauscher (3) mit Vor- und Rücklaufanschlüssen (4, 5) und weist einen weiteren Vor- und Rücklaufanschluß (6, 7) auf,
1.3 der mit Kaltwasserzufuhr- und Warmwasserabfuhranschlüssen (8, 9) versehene Brauchwasserbehälter (1) ist mit Heizmediumsvor- und -rücklaufanschlüssen (10, 11) versehen,
gekennzeichnet durch die Kombination der folgenden Merkmale:
1.4 der Rücklaufanschluß (7) des Pufferbehälters (2) ist mit dem Heizmediumsvorlaufanschluß (10) des Brauchwasserbehälters (1) verbunden,
1.5 der Vorlaufanschluß (6) des Pufferbehälters (2) ist mit dem Rücklaufanschluß (11) des Brauchwasserbehälters (1) verbunden und
1.6 der Brauchwasserbehälter (1) ist auf dem Pufferbehälter (2) angordnet, und die Verbindungsstellen (S) zwischen den Anschlüssen (6, 11; 7, 10) der Behälter (1, 2) sind lösbar ausgebildet.

2. Speicher nach Anspruch 1,
**dadurch gekennzeichnet,**
daß die beiden Behälter (1, 2) in einem gemeinsamen Umschließungsgehäuse (12) angeordnet sind.

3. Speicher nach Anspruch 2,
**dadurch gekennzeichnet,**
daß die Verbindungsstellen (S) als außerhalb des Umschließungsgehäuses (12) an die Anschlüsse (6, 7, 10, 11) anschließbare T-Stückteile (T) ausgebildet sind.

4. Speicher nach einem der Ansprüche 1 bis 3,
**dadurch gekennzeichnet,**
daß in der Vorlaufverbindung zwischen Pufferbehälter (2) und Brauchwasserbehälter (1) ein thermostatisches Vorlaufventil (16) mit Kapillarfühler angeordnet ist.

5. Speicher nach Anspruch 4,
**dadurch gekennzeichnet,**
daß das Vorlaufventil (16) als temperatureinstellbares Ventil ausgebildet ist.

## Claims

1. A multi-purpose storage for heating systems having a plurality of heat sources and heat consumers, comprising the following features:
1.1 the multi-purpose storage is formed of a process water tank (1) and a buffer tank (2);
1.2 the buffer tank (2) contains a heat exchanger (3) provided with forward and return flow connections (4,5) and includes an additional forward and return flow connection (6,7);
1.3 the process water tank (1) provided with cold water supply and hot water discharge connections (8,9) is furnished with forward and return flow connections (10,11) for the heating fluid,
characterized by the following combination:
1.4 the return flow connection (7) of the buffer tank (2) is in communication with the heating fluid forward flow connection (10) of the process water tank (1);
1.5 the forward flow connection (6) of the buffer tank (2) is in communication with the return flow connection (11) of the process water tank (1), and
1.6 the process water tank (1) is arranged on the buffer tank (2) and the connecting points (S) between the connections (6,11;7,10) of the tanks (1,2) are detachably. designed.

2. A storage according to claim 1,
characterized in that the two tanks (1,2) are arranged within a common enclosure casing (12).

3. A storage according to claim 2,
characterized in that the connecting points (S) are designed as T-pieces (T) capable of being coupled to the connection (6,7,10,11) externally of the enclosure casing (12).

4. A storage according to any one of claims 1 to 3,
characterized in that a thermostatic forward flow valve (16) having capillary sensors is arranged within the forward flow connection between buffer tank (2) and process water tank (1).

5. A storage according to claim 4,
characterized in that the forward flow valve (16) is designed in the form of a temperature adjusting valve.

## Revendications

1. Accumulateur multiple pour installations de chauffage avec plusieurs sources de chaleur et consommateurs de chaleur avec les caractéristiques suivantes :
1.1 l'accumulateur multiple est formé par un réservoir d'eau sanitaire (1) et un réservoir tampon (2),
1.2 le réservoir tampon (2) contient un échangeur thermique (3) avec des raccords aller et retour (6, 7) et présente un autre raccord aller et retour (6, 7),
1.3 le réservoir d'eau sanitaire (1) pourvu de raccords d'alimentation d'eau froide et d'évacuation d'eau chaude (8, 9) est pourvu de raccords aller et retour d'agent de chauffage (10, 11),
caractérisé par la combinaison des caractéristiques suivantes :
1.4 le raccord retour (7) du réservoir tampon (2) est relié au raccord aller d'agent de chauffage (10) du réservoir d'eau sanitaire (1),
1.5 le raccord aller (6) du réservoir tampon (2) est relié au raccord retour (11) du réservoir d'eau sanitaire (1) et
1.6 le réservoir d'eau sanitaire (1) est placé sur le réservoir tampon (2) et les endroits de jonction (S) entre les raccords (6, 11 ; 7, 10) des réservoirs (1, 2) sont configurés détachables.

2. Accumulateur selon la revendication 1,
caractérisé en ce
que les deux réservoirs (1, 2) sont placés dans un bâti d'enceinte commun (12).

3. Accumulateur selon la revendication 2,
caractérisé en ce
que les endroits de jonction (S) sont configurés comme des pièces en T (T) qui peuvent être raccordées aux raccords (6, 7, 10, 11) en dehors du bâti d'enceinte (12).

4. Accumulateur selon l'une des revendications 1 à 3,
caractérisé en ce
qu'une vanne aller thermostatique (16) avec une sonde capillaire est placée dans la jonction aller entre le réservoir tampon (2) et le réservoir d'eau sanitaire (1).

5. Accumulateur selon la revendication 4,
caractérisé en ce
que la vanne aller (16) est configurée comme une vanne à température réglable.
